# EUROPÄISCHE PATENTSCHRIFT

(11) **EP 3 086 082 B1**
(45) Veröffentlichungstag und Bekanntmachung des Hinweises auf die Patenterteilung: **29.03.2017**
(21) Anmeldenummer: 16156413.3
(22) Anmeldetag: 19.02.2016
(51) Int. Cl.: G01B 11/06

(54) **INSPEKTION MIT POLARISATIONSFILTERN**
INSPECTION WITH POLARISATION FILTERS
INSPECTION COMPRENANT DES FILTRES DE POLARISATION

(30) Priorität: 23.04.2015 AT 503242015
(43) Veröffentlichungstag der Anmeldung: 26.10.2016
(73) Patentinhaber: AIT Austrian Institute of Technology GmbH, 1220 Wien (AT)
(72) Erfinder: Huber-Mörk, Reinhold, 1220 Wien (AT); Ruisz, Johannes, 1100 Wien (AT); Soukup, Daniel, 1020 Wien (AT)
(74) Vertreter: Wildhack & Jellinek

(56) Entgegenhaltungen:
- WO-A1-01/22032
- US-A- 4 015 127
- US-A1- 2005 174 583
- US-A1- 2009 153 859

## Beschreibung

Die Erfindung betrifft ein Verfahren gemäß dem Patentanspruch 1 sowie eine Aufnahmevorrichtung gemäß dem Patentanspruch 7. Die Erfindung wird im Bereich der Prüfung von Relief-Drucken gewerblich eingesetzt.

Aus dem Stand der Technik WO 01/22032 ist eine Vorrichtung zum bildgebenden Erfassen und Prüfen von reliefartigen Gegenständen benannt. Dabei wird eine Beleuchtungsquelle auf den Gegenstand gerichtet und der Gegenstand aufgenommen.

Messungen von Schichtdicken mittels polarisiertem Licht sind aus US 2005/174583 A1, US 4015127 A und US2009/153859 A1 bekannt.

Relief-Drucke werden beispielsweise bei Holzimitaten aber auch für andere Einsatzzwecke verwendet. Ein Relief-Druck weist folgendes auf:
a) eine Textur mit einem aufgedruckten vorgegebenen Farbverlauf, und
b) eine durchsichtige Kunststoffschicht mit reliefartigem, dem Farbverlauf entsprechenden, Verlauf, die über der Textur angeordnet ist.

Bei der Herstellung von Relief-Drucken kommt es mitunter zum Problem, dass die Textur und die Kunststoffschicht nicht passgenau gefertigt sind bzw. stark gegeneinander verschoben sind. Übersteigt die Verschiebung ein vorgegebenes Maß bzw. einen vorgegebenen Schwellenwert führt dies zu optisch unschönen Effekten, insbesondere kann ein Holzimitat sehr einfach als solches wahrgenommen werden.

Im Zusammenhang mit der Erfindung wird der Begriff des Brewster-Winkels verwendet. Dieser entspricht einem Winkel, bei dem von auf die Grenzfläche zweier dielektrischer Medien einfallendem, unpolarisiertem Licht nur die senkrecht zur Einfallsebene polarisierten Anteile reflektiert werden. Das reflektierte Licht ist dann linear polarisiert.

Aufgabe der Erfindung ist es, Objekte mit verschobener Textur/Relief-Kunststoffschicht zu erkennen, um fehlerhafte Relief-Drucke aus dem Produktionsprozess ausscheiden zu können. Die Erfindung löst diese Aufgabe bei einem Prüfverfahren mit den Merkmalen des Patentanspruchs 1.

Die Erfindung sieht vor, dass zur Inspektion eines, insbesondere ebenen, Gegenstands umfassend
- eine Textur mit einem aufgedruckten vorgegebenen Farbverlauf, und
- eine durchsichtige Kunststoffschicht mit reliefartigem, dem Farbverlauf entsprechenden, Verlauf, die über der Textur angeordnet ist,
zur Ermittlung, ob die Textur und die Kunststoffschicht passgenau übereinander liegen,
a) wobei der Gegenstand mit unpolarisiertem Licht beleuchtet wird, das im Brewster-Winkel, allenfalls mit einer Abweichung von maximal 10°, auf den Gegenstand gestrahlt wird,
b) wobei der Gegenstand von der gegenüberliegenden Seite mittels einer Aufnahmeeinheit aufgenommen wird, deren optische Achse im Brewster-Winkel, allenfalls mit einer Abweichung von maximal +/- 10°, zur Oberfläche des Gegenstands steht, und wobei die optische Achse der Aufnahmeeinheit und Einstrahlrichtung des eingestrahlten Lichts in einer Ebene liegen,
c) wobei mit der Aufnahmeeinheit ein erstes Bild des Gegenstands erstellt wird, wobei zur Aufnahme lediglich Licht mit einer Polarisation senkrecht zur Einfallsebene herangezogen wird,
d) wobei mit der Aufnahmeeinheit ein zweites Bild des Gegenstands erstellt wird, wobei zur Aufnahme lediglich Licht mit einer Polarisation parallel zur Einfallsebene herangezogen wird,
e) wobei die beiden Bilder durch Korrelation miteinander verglichen werden und ein Versatz der beiden Bilder zueinander aufgrund des Ergebnisses der Korrelation ermittelt wird, und
f) dass der so ermittelte Versatz mit einem vorgegebenen Schwellenwert verglichen wird und bei Überschreitung des Schwellenwerts durch den Versatz festgestellt wird, dass die Textur und die Kunststoffschicht nicht passgenau übereinander liegen. Die Erfindung ermöglicht auf diese Weise eine besonders einfache Detektion der Passgenauigkeit von Drucken und Reliefen.

Eine numerisch effiziente Feststellung des Versatzes sieht erfindungsgemäß vor, zur Bestimmung des Versatzes die Kreuz-Korrelationsfunktion für die beiden Bilder ermittelt wird, dass in der Kreuz-Korrelationsfunktion nach zwei voneinander unabhängigen Maxima gesucht wird, und der Abstand zwischen den beiden Maxima als Versatz ermittelt wird, und dass der so ermittelte Versatz mit einem vorgegebenen Schwellenwert verglichen wird und bei Überschreitung des Schwellenwerts durch den Versatz festgestellt wird, dass die Textur und die Kunststoffschicht nicht passgenau übereinander liegen.

Ein bevorzugter Aspekt der Erfindung sieht vor, dass als Bildaufnahmeeinheit ein Zeilensensor umfassend eine Anzahl von in einer Zeile angeordneten Sensorpixeln verwendet wird, wobei die Zeilenrichtung des Zeilensensors parallel zur Oberfläche des Gegenstands steht, dass der Gegenstand und die Bildaufnahmeeinheit in einer Ebene parallel zur Oberfläche des Gegenstands und normal zur Sensorzeile der Bildaufnahmeeinheit entlang einer vorgegebenen Transportrichtung zueinander relativ bewegt werden, dass mit der Bildaufnahmeeinheit Bilder einer Gegenstandszeile des Gegenstands erstellt werden, die normal zur Transportrichtung des Gegenstands steht, und dass das erste Bild und das zweite Bild durch Zusammenfügung der Zeilenbilder oder von Teilen der Zeilenbilder, die den Gegenstand jeweils bei gleicher Polarisation aufgenommen zeigen, erstellt werden. Hierdurch ist es möglich für das gesamte Bild die Einhaltung des Brewster-Winkels bei der Aufnahme zu gewährleisten. Fehler, die sich aufgrund der nicht genauen Einhaltung des Brewster-Winkels in Randbereichen ergeben, treten somit nicht auf.

Zum gleichen Zweck kann vorgesehen sein, dass diejenige Gegenstandszeile des Gegenstands, die vom Zeilensensor erfasst ist, homogen beleuchtet wird, insbesondere mittels einer zeilenförmigen Lichtquelle, die normal zur Transportrichtung steht, dem Zeilensensor gegenüberliegt und Licht im Brewster-Winkel auf die Gegenstandszeile abstrahlt.

Um eine kompakte Bauform der Aufnahmeeinrichtung zu gewährleisten und gleichzeitig sicherzustellen, dass gleichzeitig derselbe Bereich des Objekts aufgenommen wird, kann vorgesehen sein, dass zur Erstellung der Bilder ein Zeilensensor als Aufnahmeeinheit verwendet wird, vor dem zwei Optiken angeordnet sind, dass die erste Optik die Gegenstandszeile auf einen ersten Teilbereich des Zeilensensors abbildet, wobei die erste Optik lediglich für Licht mit einer Polarisation senkrecht zur Einfallsebene durchlässig ist, dass die zweite Optik die Gegenstandszeile auf einen zweiten Teilbereich des Zeilensensors abbildet, wobei die zweite Optik lediglich für Licht mit einer Polarisation parallel zur Einfallsebene durchlässig ist.

Alternativ kann vorgesehen sein, dass zur Erstellung der Bilder zwei Zeilensensoren als Aufnahmeeinheit verwendet werden, vor denen jeweils eine Optik angeordnet ist, dass die erste Optik die Gegenstandszeile auf den ersten Zeilensensor abbildet, wobei die erste Optik lediglich für Licht mit einer Polarisation senkrecht zur Einfallsebene durchlässig ist, dass die zweite Optik die Gegenstandszeile auf den zweiten Zeilensensor abbildet, wobei die zweite Optik lediglich für Licht mit einer Polarisation parallel zur Einfallsebene durchlässig ist.

Zur vorteilhaften Ermittlung der Übereinstimmung des Reliefs mit der Textur bei Kunststoffreliefs kann vorgesehen sein, dass zur Beleuchtung Licht mit einer Wellenlänge im Bereich zwischen 500 nm bis 780 nm verwendet wird und/oder dass die Aufnahmeeinheit Licht im Bereich zwischen 500 nm bis 780 nm detektiert.

Die Erfindung löst diese Aufgabe bei einer Aufnahmevorrichtung mit den Merkmalen des Patentanspruchs 7.

Die Erfindung sieht vor, dass zur Inspektion eines, insbesondere ebenen, Gegenstands mit einer Textur mit einem aufgedruckten vorgegebenen Farbverlauf, und einer durchsichtigen Kunststoffschicht mit reliefartigem, dem Farbverlauf entsprechenden, Verlauf, die über der Textur angeordnet ist, sowie zur Ermittlung, ob die Textur und die Kunststoffschicht passgenau übereinander liegen, umfassend
a) eine Beleuchtungseinheit zur Beleuchtung des Gegenstands mit unpolarisiertem Licht, das im Brewster-Winkel, allenfalls mit einer Abweichung von maximal 10°, auf die Oberfläche des Gegenstands einstrahlt,
b) eine Aufnahmeeinheit, die den Gegenstand von der gegenüberliegenden Seite her abbildet, wobei die optische Achse der Aufnahmeeinheit im Brewster-Winkel, allenfalls mit einer Abweichung von maximal +/- 10°, zur Oberfläche des Gegenstands steht, und wobei die optische Achse der Aufnahmeeinheit und Einstrahlrichtung des eingestrahlten Lichts in einer Ebene liegen,
c) einen vor der Aufnahmeeinheit angeordneten oder positionierbaren ersten Polarisationsfilter der lediglich für Licht mit einer Polarisation senkrecht zur Einfallsebene durchlässig ist,
d) einen vor der Aufnahmeeinheit angeordneten oder positionierbaren zweiten Polarisationsfilter der lediglich für Licht mit einer Polarisation parallel zur Einfallsebene durchlässig ist,
e) wobei die Aufnahmeeinheit zur Erstellung eines ersten Bilds unter Filterung des bei ihr einfallenden Lichts mit dem ersten Polarisationsfilter und eines zweiten Bilds unter Filterung des bei ihr einfallenden Lichts mit dem zweiten Polarisationsfilter ausgebildet ist,
f) eine Vergleichseinheit, die die beiden Bilder durch Korrelation miteinander vergleicht und einen Versatz der beiden Bilder zueinander aufgrund des Ergebnisses der Korrelation ermittelt, und
g) eine Entscheidungseinheit, die den so ermittelten Versatz mit einem vorgegebenen Schwellenwert vergleicht und bei Überschreitung des Schwellenwerts durch den Versatz feststellt, dass die Textur und die Kunststoffschicht nicht passgenau übereinander liegen. Die Erfindung ermöglicht auf diese Weise eine besonders einfache Detektion der Passgenauigkeit von Drucken und Reliefen.

Eine numerisch effiziente Feststellung des Versatzes sieht vor, dass die Vergleichseinheit zur Bestimmung des Versatzes die Kreuz-Korrelationsfunktion für die beiden Bilder ermittelt, dass die Vergleichseinheit in der Kreuz-Korrelationsfunktion nach zwei voneinander unabhängigen Maxima sucht, den Abstand zwischen den beiden Maxima als Versatz ermittelt, und eine Entscheidungseinheit, die den so ermittelten Versatz mit einem vorgegebenen Schwellenwert vergleicht und bei Überschreitung des Schwellenwerts durch den Versatz feststellt, dass die Textur und die Kunststoffschicht nicht passgenau übereinander liegen.

Ein bevorzugter Aspekt der Erfindung sieht vor, dass die Bildaufnahmeeinheit durch einen Zeilensensor umfassend eine Anzahl von in einer Zeile angeordneten Sensorpixeln ausgebildet ist, wobei die Zeilenrichtung des Zeilensensors parallel zur Oberfläche des Gegenstands steht, dass eine Transporteinrichtung vorhanden ist, die den Gegenstand und die Bildaufnahmeeinheit entlang einer vorgegebenen Transportrichtung zueinander relativ bewegt, wobei die Fortbewegungsrichtung in einer Ebene parallel zur Oberfläche des Gegenstands und normal zur Sensorzeile der Bildaufnahmeeinheit liegt, dass die Bildaufnahmeeinheit Bilder einer Gegenstandszeile des Gegenstands erstellt, wobei die Gegenstandszeile normal zur Transportrichtung des Gegenstands steht, und dass die Bildaufnahmeeinheit das erste Bild und das zweite Bild durch Zusammenfügung der Zeilenbilder oder von Teilen der Zeilenbilder erstellt, wobei die Bildaufnahmeeinheit die Zeilenbilder aufgenommen mit Polarisation senkrecht zur Einfallsebene zum ersten Bild und die Zeilenbilder aufgenommen mit Polarisation parallel zur Einfallsebene zum zweiten Bild zusammenfügt. Hierdurch ist es möglich für das gesamte Bild die Einhaltung des Brewster-Winkels bei der Aufnahme zu gewährleisten. Fehler, die sich aufgrund der nicht genauen Einhaltung des Brewster-Winkels in Randbereichen ergeben, treten somit nicht auf.

Zum gleichen Zweck kann vorgesehen sein, dass die Beleuchtungseinheit diejenige Gegenstandszeile des Gegenstands, die vom Zeilensensor erfasst ist, homogen beleuchtet, wobei die Beleuchtungseinheit insbesondere durch eine zeilenförmige Lichtquelle gebildet ist, die normal zur Transportrichtung steht, dem Zeilensensor gegenüberliegt und Licht im Brewster-Winkel auf die Gegenstandszeile abstrahlt.

Um eine kompakte Bauform der Aufnahmeeinrichtung zu gewährleisten und gleichzeitig sicherzustellen, dass gleichzeitig derselbe Bereich des Objekts aufgenommen wird, kann vorgesehen sein, dass die Aufnahmeeinheit durch einen Zeilensensor ausgebildet ist, vor dem zwei Optiken angeordnet sind, dass die erste Optik die Gegenstandszeile auf einen ersten Teilbereich des Zeilensensors abbildet, wobei die erste Optik lediglich für Licht mit einer Polarisation senkrecht zur Einfallsebene durchlässig ist, dass die zweite Optik die Gegenstandszeile auf einen zweiten Teilbereich des Zeilensensors abbildet, wobei die zweite Optik lediglich für Licht mit einer Polarisation parallel zur Einfallsebene durchlässig ist.

Eine alternative Bauform sieht vor, dass die Aufnahmeeinheit durch zwei Zeilensensoren ausgebildet ist, vor denen jeweils eine Optik angeordnet ist, dass die erste Optik die Gegenstandszeile auf den ersten Zeilensensor abbildet, wobei die erste Optik lediglich für Licht mit einer Polarisation senkrecht zur Einfallsebene durchlässig ist, dass die zweite Optik die Gegenstandszeile auf den zweiten Zeilensensor abbildet, wobei die zweite Optik lediglich für Licht mit einer Polarisation parallel zur Einfallsebene durchlässig ist.

Zur vorteilhaften Ermittlung der Übereinstimmung des Reliefs mit der Textur bei Kunststoffreliefs kann vorgesehen sein, dass die Beleuchtungseinheit Licht mit einer Wellenlänge im Bereich zwischen 500 nm bis 780 nm abstrahlt und/oder dass die Aufnahmeeinheit für Licht im Bereich zwischen 500 nm bis 780 nm sensitiv ist.

Einige bevorzugte Ausführungsformen werden anhand der folgenden Zeichnungsfiguren näher dargestellt.

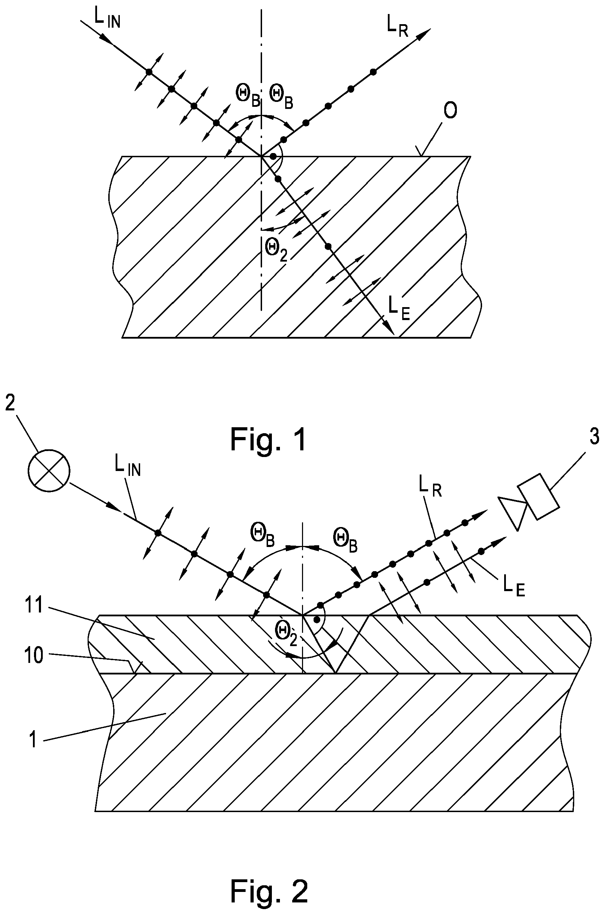

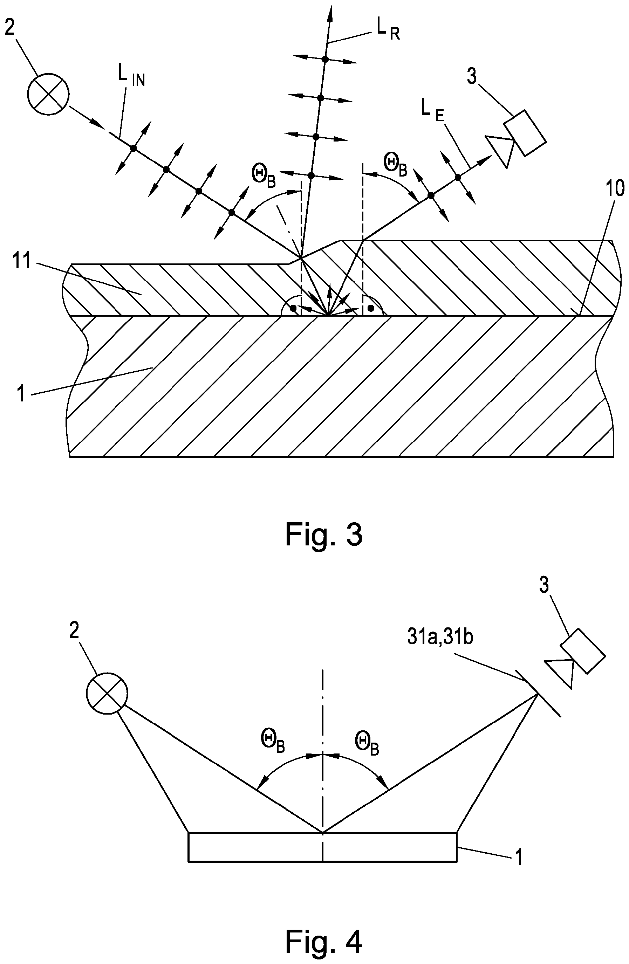

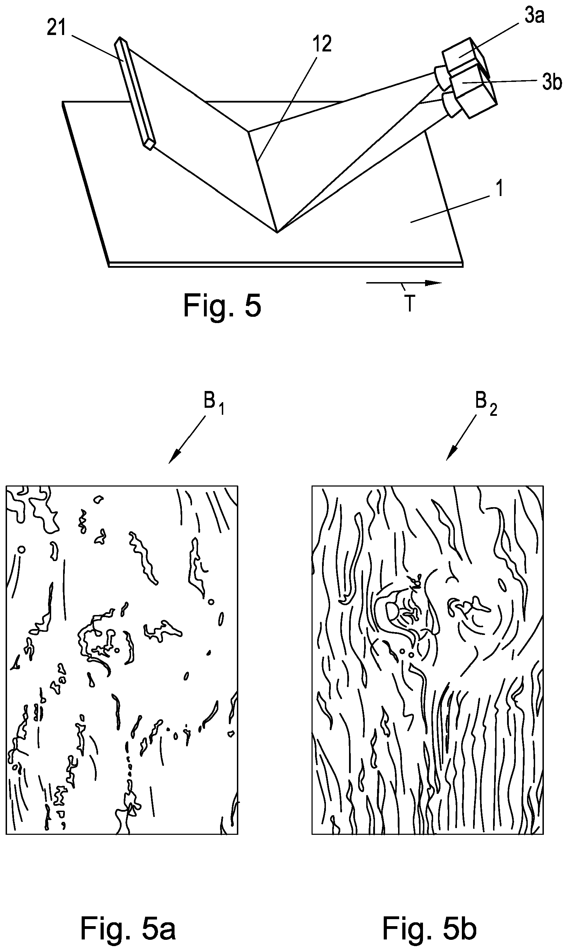

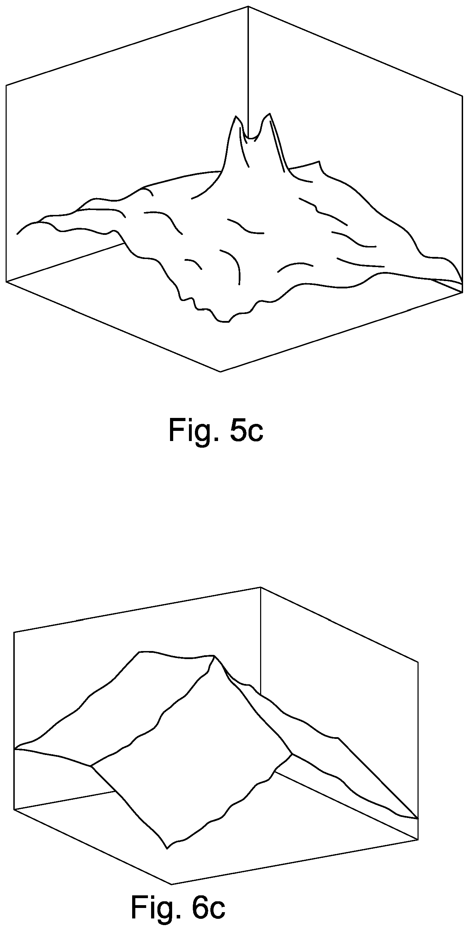

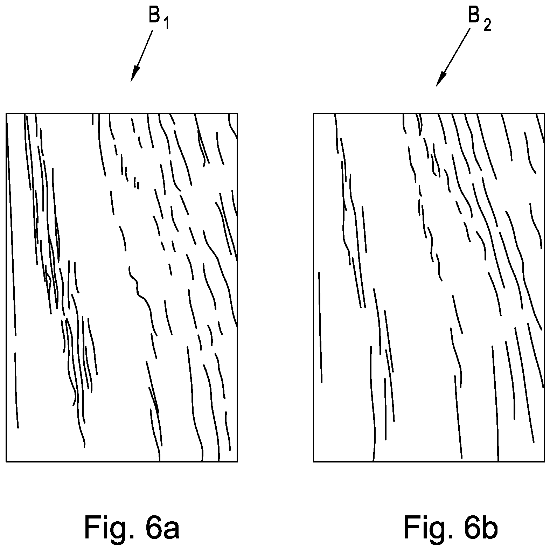

**Fig. 1** zeigt den allgemein zugrundeliegenden und von der Erfindung ausgenützten physikalischen Effekt. **Fig. 2** zeigt das Verhalten eines Relief-Drucks, wenn er mit Licht bestrahlt wird, das im Brewster-Winkel auf seine Oberfläche einstrahlt. **Fig. 3** zeigt die dem Verfahren zugrunde liegenden physikalischen Phänomene. **Fig. 4** zeigt eine erste Ausführungsform der Erfindung mit einer Flächenkamera. **Fig. 5** zeigt eine dritte Ausführungsform der Erfindung mit zwei Zeilenkameras. **Fig. 5a bis 5c** zeigen die Auswertung von ermittelten Bildern sowie die Feststellung eines fehlerhaften Gegenstands. **Fig. 6a bis 6c** zeigen die Auswertung von ermittelten Bildern sowie die Feststellung eines fehlerfreien Gegenstands.

In **Fig. 1** ist ein einfallender Lichtstrahl L_{IN} dargestellt, der im Brewster-Winkel θ_{B} auf eine durchsichtige Oberfläche O trifft. Der Brewster-Winkel θ_{B} stellt dabei denjenigen Winkel dar, bei dem der von der Oberfläche O reflektierte Strahl L_{R} im rechten Winkel zu dem in die Oberfläche eindringenden Strahl L_{E} steht. Die einzelnen Strahlen liegen in derselben Ebene, die in **Fig. 1** die Zeichnungsebene darstellt. Diese Ebene wird im Folgenden als Einfallsebene bezeichnet.
Der einfallende Lichtstrahl L_{IN} ist nicht polarisiert und weist Polarisationsanteile sowohl senkrecht als auch parallel zur Einfallsebene auf, wie durch die dargestellten Pfeile sowie die als Punkte normal zur Bildebene der Fig. 1 dargestellten Pfeile ersichtlich. Der von der Oberfläche O reflektierte Strahl L_{R} weist ausschließlich Lichtanteile auf, die normal zur Einfallsebene stehen. Der in die Oberfläche eindringende Strahl L_{E} weist überwiegende Lichtanteile auf, die parallel zur Einfallsebene stehen.

In **Fig. 2** ist ein Gegenstand 1 mit einer Kunststoffschicht dargestellt, der für ein Holzimitat verwendet wird. Üblicherweise ist die Kunststoffschicht in Form eines Relief-Drucks ausgebildet. Die dem Verfahren zugrunde liegenden physikalischen Phänomene werden zunächst vereinfachend anhand einer ebenen Kunststoffschicht dargestellt. Der Gegenstand weist an seiner Oberfläche eine Textur 10 auf, die einen aufgedruckten vorgegebenen Farbverlauf hat. Über dieser Textur 10 ist ein Relief 11 in Form einer durchsichtigen Kunststoffschicht aufgebracht, die einen reliefartigen Verlauf aufweist. Der Verlauf des Reliefs 11 entspricht dabei im Wesentlichen dem Farbverlauf. Da die Strukturen des Reliefs 11 den Strukturen der Texturen ähneln, ergibt sich gerade bei Holzimitaten ein realistischer Eindruck.

Gelangt der einfallende Strahl L_{IN} an einen Bereich der Oberfläche des Reliefs 11 des Gegenstands 1, der annähernd parallel zur Oberfläche der Textur 10 des Gegenstands liegt, so fällt der Strahl L_{IN} gerade im Brewster-Winkel auf die Oberfläche. Der Lichtstrahl L_{IN} teilt sich in den in die Oberfläche eindringenden Strahl L_{E} einerseits und den von der Oberfläche reflektierten Strahl L_{R} andererseits. Der an der Oberfläche reflektierte Strahl L_{R} wird im Brewster-Winkel reflektiert. Der in die Oberfläche eindringende Strahl L_{E} wird an der Textur 10 diffus reflektiert, wobei ein Anteil des diffus reflektierten Lichts durch das Relief 11 hindurch dringt und derart aus dem Relief 11 austritt, dass es im Brewster-Winkel von der Oberfläche des Reliefs 1 abgestrahlt wird.

Für den Fall, dass der eintretende Lichtstrahl L_{IN} auf einen Bereich des Reliefs 11 trifft, der nicht parallel zur Textur 10 steht, (**Fig. 3**) wird der von der Oberfläche reflektierte Strahl L_{R} nicht im Brewser-Winkel reflektiert und kann von einer in diesem Winkel auf die Oberfläche gerichteten Aufnahmeeinheit 3 nicht detektiert werden. Ein Anteil des in die Oberfläche eindringenden Strahls L_{E} wird diffus reflektiert, dringt durch das Relief 11 hindurch und tritt derart aus dem Relief 11 aus, dass er im Brewster-Winkel von der Oberfläche des Reliefs 1 abgestrahlt wird. Auf diese Weise können zur Oberfläche annähernd parallel stehende Bereiche des Reliefs 11 von anderen Bereichen des Reliefs 11 unterschieden werden.

Bei einer in **Fig. 4** dargestellten **ersten Ausführungsform** einer erfindungsgemäßen Aufnahmeanordnung ist eine Flächenkamera 3 auf den Gegenstand gerichtet, der von einer Beleuchtungseinheit 2 bestrahlt ist. Die Beleuchtungseinheit 2 ist zur Beleuchtung des Gegenstands 1 mit unpolarisiertem Licht ausgebildet und strahlt Licht im Brewster-Winkel θ_{B} zur Oberflächennormale des Gegenstands 1 ein. Es ist nicht erforderlich, dass dieser Winkel exakt eingehalten wird. Es reicht auch aus, dass die Abweichung des Winkels des einstrahlenden Lichts zum Brewster-Winkel maximal 10° beträgt.

Die Aufnahmeanordnung umfasst ferner eine Aufnahmeeinheit 3, die den Gegenstand 1 von der gegenüberliegenden Seite her abbildet. Die optische Achse der Aufnahmeeinheit steht im Brewster-Winkel zur Oberflächennormale des Gegenstands 1. Auch hier ist es nicht erforderlich, dass dieser Winkel exakt eingehalten wird. Es reicht wiederum aus, dass die Abweichung des Winkels des einstrahlenden Lichts zum Brewster-Winkel maximal 10° beträgt.

Die optische Achse der Aufnahmeeinheit 3 und Beleuchtungseinheit 2 des eingestrahlten Lichts liegen in einer Ebene, die als Einfallsebene bezeichnet wird.

Die als Flächensensor ausgebildete Aufnahmeeinheit erstellt ein erstes Bild B₁ (**Fig. 5a**) des Gegenstands 1. Bei dieser Aufnahme ist ein erster Polarisationsfilter vor der Aufnahmeeinheit 3 angeordnet, der für lediglich Licht mit einer Polarisation senkrecht zur Einfallsebene durchlässig ist.

Die als Flächensensor ausgebildete Aufnahmeeinheit erstellt ein zweites Bild B₂ (**Fig. 5b**) des Gegenstands 1. Bei dieser Aufnahme ist ein zweiter Polarisationsfilter vor der Aufnahmeeinheit 3 angeordnet, der für lediglich Licht mit einer Polarisation parallel zur Einfallsebene durchlässig ist.

Allenfalls kann auch ein einziger Polarisationsfilter verwendet werden, der zwischen den Aufnahmen rotiert wird, und bei der Aufnahme des zweiten Bilds eine zweite Polarisationsrichtung aufweist. Daneben besteht bei manchen Polarisationsfiltermaterialien auch die Möglichkeit, die Polarisationsrichtung des Polarisationsfilters durch elektrische Ansteuerung zu erreichen.

Die beiden Bilder B₁, B₂ werden an eine Vergleichseinheit weitergeleitet, die die beiden Bilder durch Korrelation miteinander vergleicht und einen Versatz der beiden Bilder zueinander aufgrund des Ergebnisses der Korrelation ermittelt.

Bevorzugt ermittelt die Vergleichseinheit zur Bildung des Versatzes die Kreuz-Korrelationsfunktion für die beiden Bilder B₁, B₂ (**Fig. 5c**). Die Vergleichseinheit sucht in der Kreuz-Korrelationsfunktion nach zwei voneinander unabhängigen Maxima. Dieser Abstand zwischen den beiden Maxima entspricht dem Versatz.

Der Grund für das Entstehen von zwei Maxima bei Vorliegen einer Verschiebung zwischen Relief und Texturschicht liegt darin, dass der in das Relief eindringende Strahl L_{E} nur überwiegend parallel polarisiert ist, jedoch auch Anteile senkrecht polarisierten Lichtes enthält. Dadurch erscheint die Texturschicht aber in beiden Bildern B₁, B₂. Ein Maximum der Kreuzkorrelationfunktion entsteht daher dadurch, dass die in den beiden Bildern B₁, B₂ enthaltene Texturschicht mit sich selbst übereinstimmt. Das andere Maximum der Kreuzkorrelationfunktion entsteht dadurch, dass das Relief und die Textur in den beiden Bildern B₁, B₂ übereinstimmen.

Eine Entscheidungseinheit vergleicht den so ermittelten Versatz mit einem vorgegebenen Schwellenwert und stellt bei Überschreitung des Schwellenwerts durch den Versatz fest, dass die Textur 10 und die Kunststoffschicht 11 nicht passgenau übereinander liegen. Andernfalls stellt sie fest, dass die Textur 10 und die Kunststoffschicht 11 des Reliefs passgenau übereinander liegen.

Bei einer **zweiten Ausführungsform** der Erfindung wird ein Zeilensensor 3 verwendet, der auf den Gegenstand 1 ausgerichtet ist. Wird anstelle eines Flächensensors ein Zeilensensor 3 verwendet, so wird zu einem Aufnahmezeitpunkt jeweils nur eine Gegenstandszeile 12 des Gegenstands 1 aufgenommen. Die Aufnahme des Gegenstands 1 erfolgt in einzelnen Zeitschritten, wobei der Gegenstand 1 relativ zum Zeilensensor 3 entlang einer Transportrichtung T transportiert wird; das zu erstellende Bild B₁, B₂ wird aus den einzelnen aufgenommenen Zeilenbildern zusammengesetzt. Wesentlicher Vorteil dieses Vorgehens ist, dass die einzelnen aufgenommenen Zeilenbilder jeweils unter demselben Winkel aufgenommen wurden, was eine bessere und präzisere Einstellung des Brewster-Winkels für die einzelne Aufnahme ermöglicht.

Im vorliegenden Fall umfasst der Zeilensensor eine Anzahl von in einer Zeile angeordneten Sensorpixeln. Die Zeilenrichtung des Zeilensensors 3 steht parallel zur Oberfläche des Gegenstands 1. Der Gegenstand 1 wird von einer Transporteinheit in einer Transportrichtung T bewegt. Diese liegt parallel zur Oberfläche des Gegenstands 1 und normal zur Sensorzeile des Zeilensensors 3. Mit der Bildaufnahmeeinheit 3 werden Zeilenbilder einer Gegenstandszeile 12 erstellt, die normal zur Transportrichtung T des Gegenstands 1 steht.

Alternativ besteht auch die Möglichkeit, die Aufnahmevorrichtung umfassend die Beleuchtungseinheit 2 und die Bildaufnahmeeinheit 3 entlang der Transportrichtung oder entgegen der Transportrichtung zu bewegen und den Gegenstand 1 festzuhalten. Insgesamt reicht somit eine Relativbewegung zwischen der Aufnahmevorrichtung und dem Gegenstand 1 aus.

Zur Beleuchtung des Gegenstands 1 kann wie bei der ersten Ausführungsform der Erfindung jede beliebige Beleuchtungseinheit 2 verwendet werden, die Licht im Brewster-Winkel auf den Gegenstand bzw. auf die Gegenstandszeile 12 einstrahlt. In der vorliegenden Ausführungsform der Erfindung wird bevorzugt eine Beleuchtungseinheit 2 verwendet, die die Gegenstandszeile 12 homogen beleuchtet. Hierfür kommt insbesondere eine zeilenförmige Beleuchtungseinheit 2 mit schmalem Abstrahlungswinkel in Betracht, deren Zeilenrichtung normal zur Transportrichtung T steht, dem Zeilensensor 3 gegenüberliegt und Licht im Brewster-Winkel auf die Gegenstandszeile 12 abstrahlt.

Um jeweils zwei Bilder mit jeweils unterschiedlicher Polarisationsrichtung zu erhalten, können unterschiedliche Verfahren angewendet werden. Bei der Verwendung von Zeilensensoren 3 werden das erste Bild B₁ und das zweite Bild B₂ durch Zusammenfügung der einzelnen Zeilenbilder oder von Teilen der Zeilenbildern erstellt, die den Gegenstand 1 jeweils bei gleicher Polarisation aufgenommen zeigen.

Eine vorteilhafte Möglichkeit zur Erstellung der Bilder B₁, B₂ besteht darin, einen einzigen Zeilensensor 3 als Aufnahmeeinheit zu verwenden, vor dem zwei Optiken angeordnet sind. Diese beiden Optiken ermöglichen, dass die Gegenstandszeile 12 zwei mal auf die Sensorzeile abgebildet wird, nämlich aufgrund der ersten Optik auf einen ersten zusammenhängenden Teilbereich des Zeilensensors 3 und aufgrund der zweiten Optik auf einen zweiten Teilbereich des Zeilensensors 3. Beide Optiken sind dabei jeweils mit unterschiedlichen Polarisationsfiltern versehen.

Die erste Optik bildet die Gegenstandszeile 12 auf einen ersten Teilbereich des Zeilensensors 3 ab, wobei die erste Optik lediglich für Licht mit einer Polarisation senkrecht zur Einfallsebene durchlässig ist. Auf den ersten Teilbereich des Zeilensensors 3 wird daher im wesentlichen das unmittelbar reflektierte Licht L_{R} abgebildet.

Die zweite Optik bildet die Gegenstandszeile 12 auf einen zweiten Teilbereich des Zeilensensors 3 ab, wobei die zweite Optik lediglich für Licht mit einer Polarisation parallel zur Einfallsebene durchlässig ist. Auf den zweiten Teilbereich des Zeilensensors 3 wird daher im wesentlichen derjenige Lichtanteil abgebildet, der durch das Relief hindurchgetreten ist und derart zum Zeilensensor gelangt ist.

Zur Erstellung des ersten Bilds B₁ werden die zeilenförmigen Teilbilder, die mit dem ersten Teilbereich des Zeilensensors erstellt werden zusammengefasst. Ebenso werden zur Erstellung des zweiten Bilds B₂ die zeilenförmigen Teilbilder, die mit dem zweiten Teilbereich des Zeilensensors erstellt werden zusammengefasst.

Bei der in **Fig. 5** dargestellten **dritten Ausführungsform,** die bis auf die folgenden Darstellungen der zweiten Ausführungsform der Erfindung entspricht, werden zur Erstellung der Bilder B₁, B₂ zwei separate Zeilensensoren 3a, 3b als Aufnahmeeinheit verwendet, wobei vor jedem Zeilensensor 3a, 3b jeweils eine separate Optik angeordnet ist. Wie bei der zweiten Ausführungsform wird durch die unterschiedliche Polarisation der beiden Optiken sichergestellt, dass separate Bilder B₁, B₂ erstellt werden, die jeweils das Licht identischer Gegenstandsbereiche 12 jeweils bei unterschiedlicher Polarisationsrichtung zeigen.

Die erste Optik bildet die Gegenstandszeile 12 auf den ersten Zeilensensor 3a ab, wobei die erste Optik lediglich für Licht mit einer Polarisation senkrecht zur Einfallsebene durchlässig ist. Die zweite Optik bildet die Gegenstandszeile 12 auf den zweiten Zeilensensor 3b ab, wobei die zweite Optik lediglich für Licht mit einer Polarisation parallel zur Einfallsebene durchlässig ist.

Zur Erstellung des ersten Bilds B₁ werden die zeilenförmigen Bilder, die mit dem ersten Zeilensensor 3a erstellt werden zusammengefasst. Ebenso werden zur Erstellung des zweiten Bilds B₂ die zeilenförmigen Bilder, die mit dem zweiten Zeilensensor 3b erstellt werden zusammengefasst.

Der abschließende rechnerische Vergleich kann bei sämtlichen Ausführungsformen der Erfindung wie bei der ersten Ausführungsform der Erfindung erfolgen.

Besonders bevorzugt wird bei allen Ausführungsformen der Erfindung für die Betrachtung von Kunststoff-Reliefs Licht mit einer Wellenlänge im Bereich zwischen 500 nm bis 780 nm verwendet. Die Beleuchtungseinheit strahlt Licht mit einer Wellenlänge im Bereich zwischen 500 nm bis 780 nm ab. Die Aufnahmeeinheit ist für Licht im Bereich zwischen 500 nm bis 780 nm sensitiv.

## Patentansprüche

1. Verfahren zur Inspektion eines, insbesondere ebenen, Gegenstands (1) umfassend
- eine Textur (10) mit einem aufgedruckten vorgegebenen Farbverlauf, und
- eine durchsichtige Kunststoffschicht (11) mit reliefartigem, dem Farbverlauf entsprechenden, Verlauf, die über der Textur (10) angeordnet ist,
zur Ermittlung, ob die Textur (10) und die Kunststoffschicht (11) passgenau übereinander liegen,
a) wobei der Gegenstand (1) mit unpolarisiertem Licht beleuchtet wird, das im Brewster-Winkel (θ_{B}), allenfalls mit einer Abweichung von maximal 10°, auf den Gegenstand (1) gestrahlt wird,
b) wobei der Gegenstand (1) von der gegenüberliegenden Seite mittels einer Aufnahmeeinheit aufgenommen wird, deren optische Achse im Brewster-Winkel (θ_{B}), allenfalls mit einer Abweichung von maximal +/- 10°, zur Oberfläche des Gegenstands (1) steht, und wobei die optische Achse der Aufnahmeeinheit und Einstrahlrichtung des eingestrahlten Lichts in einer Ebene liegen,
c) wobei mit der Aufnahmeeinheit ein erstes Bild (B₁) des Gegenstands (1) erstellt wird, wobei zur Aufnahme lediglich Licht mit einer Polarisation senkrecht zur Einfallsebene herangezogen wird,
d) wobei mit der Aufnahmeeinheit (3) ein zweites Bild des Gegenstands (1) erstellt wird, wobei zur Aufnahme lediglich Licht mit einer Polarisation parallel zur Einfallsebene herangezogen wird,
e) wobei die beiden Bilder (B₁, B₂) durch Korrelation miteinander verglichen werden und ein Versatz der beiden Bilder (B₁, B₂) zueinander aufgrund des Ergebnisses der Korrelation ermittelt wird,
f) wobei der so ermittelte Versatz mit einem vorgegebenen Schwellenwert verglichen wird und bei Überschreitung des Schwellenwerts durch den Versatz festgestellt wird, dass die Textur (10) und die Kunststoffschicht (11) nicht passgenau übereinander liegen,
g) wobei zur Bestimmung des Versatzes die Kreuz-Korrelationsfunktion für die beiden Bilder (B₁, B₂) ermittelt wird, und
h) wobei in der Kreuz-Korrelationsfunktion nach zwei voneinander unabhängigen Maxima gesucht wird, und der Abstand zwischen den beiden Maxima als Versatz ermittelt wird.

2. Verfahren nach Anspruch 1,
- wobei als Bildaufnahmeeinheit ein Zeilensensor (3) umfassend eine Anzahl von in einer Zeile angeordneten Sensorpixeln verwendet wird, wobei die Zeilenrichtung des Zeilensensors parallel zur Oberfläche des Gegenstands (1) steht,
- wobei der Gegenstand (1) und die Bildaufnahmeeinheit in einer Ebene parallel zur Oberfläche des Gegenstands (1) und normal zur Sensorzeile der Bildaufnahmeeinheit entlang einer vorgegebenen Transportrichtung (T) zueinander relativ bewegt werden,
- wobei mit der Bildaufnahmeeinheit (3) Bilder einer Gegenstandszeile des Gegenstands (1) erstellt werden, die normal zur Transportrichtung (T) des Gegenstands (1) steht, und
- wobei das erste Bild (B₁) und das zweite Bild (B₂) durch Zusammenfügung der Zeilenbilder oder von Teilen der Zeilenbilder, die den Gegenstand (1) jeweils bei gleicher Polarisation aufgenommen zeigen, erstellt werden.

3. Verfahren nach Anspruch 2, wobei diejenige Gegenstandszeile (12) des Gegenstands (1), die vom Zeilensensor erfasst ist, homogen beleuchtet wird, insbesondere mittels einer zeilenförmigen Lichtquelle (2), die normal zur Transportrichtung (T) steht, dem Zeilensensor (3) gegenüberliegt und Licht im Brewster-Winkel auf die Gegenstandszeile abstrahlt.

4. Verfahren nach Anspruch 2 oder 3,
- wobei zur Erstellung der Bilder (B₁, B₂) ein Zeilensensor (3) als Aufnahmeeinheit verwendet wird, vor dem zwei Optiken angeordnet sind,
- wobei die erste Optik die Gegenstandszeile (12) auf einen ersten Teilbereich des Zeilensensors (3) abbildet, wobei die erste Optik lediglich für Licht mit einer Polarisation senkrecht zur Einfallsebene durchlässig ist, und
- wobei die zweite Optik die Gegenstandszeile (12) auf einen zweiten Teilbereich des Zeilensensors (3) abbildet, wobei die zweite Optik lediglich für Licht mit einer Polarisation parallel zur Einfallsebene durchlässig ist.

5. Verfahren nach Anspruch 2 oder 3,
- wobei zur Erstellung der Bilder (B₁, B₂) zwei Zeilensensoren (3a, 3b) als Aufnahmeeinheit verwendet werden, vor denen jeweils eine Optik angeordnet ist,
- wobei die erste Optik die Gegenstandszeile (12) auf den ersten Zeilensensor (3a) abbildet, wobei die erste Optik lediglich für Licht mit einer Polarisation senkrecht zur Einfallsebene durchlässig ist, und
- wobei die zweite Optik die Gegenstandszeile (12) auf den zweiten Zeilensensor (3b) abbildet, wobei die zweite Optik lediglich für Licht mit einer Polarisation parallel zur Einfallsebene durchlässig ist.

6. Verfahren nach einem der vorangehenden Ansprüche, wobei zur Beleuchtung Licht mit einer Wellenlänge im Bereich zwischen 500 nm bis 780 nm verwendet wird und/oder die Aufnahmeeinheit Licht im Bereich zwischen 500 nm bis 780 nm detektiert.

7. Aufnahmeanordnung zur Inspektion eines, insbesondere ebenen, Gegenstands (1) mit einer Textur (10) mit einem aufgedruckten vorgegebenen Farbverlauf, und einer durchsichtigen Kunststoffschicht (11) mit reliefartigem, dem Farbverlauf entsprechenden, Verlauf, die über der Textur (10) angeordnet ist, sowie zur Ermittlung, ob die Textur (10) und die Kunststoffschicht (11) passgenau übereinander liegen, umfassend
a) eine Beleuchtungseinheit (2), ausgebildet zur Beleuchtung des Gegenstands (1) mit unpolarisiertem Licht, das im Brewster-Winkel (θ_{B}), allenfalls mit einer Abweichung von maximal 10°, auf die Oberfläche des Gegenstands (1) einstrahlt,
b) eine Aufnahmeeinheit (3), die ausgebildet ist um den Gegenstand (1) von der gegenüberliegenden Seite her abzubilden, wobei die optische Achse der Aufnahmeeinheit im Brewster-Winkel, allenfalls mit einer Abweichung von maximal +/- 10°, zur Oberfläche des Gegenstands (1) steht, und wobei die optische Achse der Aufnahmeeinheit und Einstrahlrichtung des eingestrahlten Lichts in einer Ebene liegen,
c) einen vor der Aufnahmeeinheit (3) angeordneten oder positionierbaren ersten Polarisationsfilter der lediglich für Licht mit einer Polarisation senkrecht zur Einfallsebene durchlässig ist,
d) einen vor der Aufnahmeeinheit (3) angeordneten oder positionierbaren zweiten Polarisationsfilter der lediglich für Licht mit einer Polarisation parallel zur Einfallsebene durchlässig ist,
e) wobei die Aufnahmeeinheit (3) zur Erstellung eines ersten Bilds (B₁) unter Filterung des bei ihr einfallenden Lichts mit dem ersten Polarisationsfilter und eines zweiten Bilds (B₂) unter Filterung des bei ihr einfallenden Lichts mit dem zweiten Polarisationsfilter ausgebildet ist,
f) eine Vergleichseinheit, die ausgebildet ist um die beiden Bilder (B₁, B₂) durch Korrelation miteinander zu vergleichen, und einen Versatz der beiden Bilder zueinander aufgrund des Ergebnisses der Korrelation zu ermitteln,
g) eine Entscheidungseinheit, die ausgebildet ist um den so ermittelten Versatz mit einem vorgegebenen Schwellenwert zu vergleichen und bei Überschreitung des Schwellenwerts durch den Versatz festzustellen, dass die Textur (10) und die Kunststoffschicht (11) nicht passgenau übereinander liegen,
h) wobei die Vergleichseinheit ausgebildet ist um die Kreuz-Korrelationsfunktion für die beiden Bilder zu ermitteln, zur Bestimmung des Versatzes, und
i) wobei die Vergleichseinheit ausgebildet ist um in der Kreuz-Korrelationsfunktion nach zwei voneinander unabhängigen Maxima zu suchen, und den Abstand zwischen den beiden Maxima als Versatz zu ermitteln.

8. Aufnahmeanordnung nach Anspruch 7,
- wobei die Bildaufnahmeeinheit (3) durch einen Zeilensensor umfassend eine Anzahl von in einer Zeile angeordneten Sensorpixeln ausgebildet ist, wobei die Zeilenrichtung des Zeilensensors parallel zur Oberfläche des Gegenstands (1) steht,
- wobei eine Transporteinrichtung vorhanden ist, die den Gegenstand (1) und die Bildaufnahmeeinheit (3) entlang einer vorgegebenen Transportrichtung (T) zueinander relativ bewegt, wobei die Fortbewegungsrichtung in einer Ebene parallel zur Oberfläche des Gegenstands (1) und normal zur Sensorzeile der Bildaufnahmeeinheit (3) liegt,
- wobei die Bildaufnahmeeinheit (3) Bilder (B₁, B₂) einer Gegenstandszeile (12) des Gegenstands (1) erstellt, wobei die Gegenstandszeile (12) normal zur Transportrichtung (T) des Gegenstands (1) steht, und
- wobei die Bildaufnahmeeinheit (3) das erste Bild (B₁) und das zweite Bild (B₂) durch Zusammenfügung der Zeilenbilder oder von Teilen der Zeilenbilder erstellt, wobei die Bildaufnahmeeinheit (3) die Zeilenbilder aufgenommen mit Polarisation senkrecht zur Einfallsebene zum ersten Bild (B₁) und die Zeilenbilder aufgenommen mit Polarisation parallel zur Einfallsebene zum zweiten Bild (B₂) zusammenfügt.

9. Aufnahmeanordnung nach Anspruch 8, wobei die Beleuchtungseinheit (2) diejenige Gegenstandszeile (12) des Gegenstands (1), die vom Zeilensensor (3) erfasst ist, homogen beleuchtet,
wobei die Beleuchtungseinheit (2) insbesondere durch eine zeilenförmige Lichtquelle gebildet ist, die normal zur Transportrichtung (T) steht, dem Zeilensensor (3) gegenüberliegt und Licht im Brewster-Winkel auf die Gegenstandszeile (12) abstrahlt.

10. Aufnahmeanordnung nach Anspruch 8 oder 9,
- wobei die Aufnahmeeinheit (3) durch einen Zeilensensor ausgebildet ist, vor dem zwei Optiken angeordnet sind,
- wobei die erste Optik die Gegenstandszeile (12) auf einen ersten Teilbereich des Zeilensensors (3) abbildet, wobei die erste Optik lediglich für Licht mit einer Polarisation senkrecht zur Einfallsebene durchlässig ist, und
- wobei die zweite Optik die Gegenstandszeile (12) auf einen zweiten Teilbereich des Zeilensensors (3) abbildet, wobei die zweite Optik lediglich für Licht mit einer Polarisation parallel zur Einfallsebene durchlässig ist.

11. Aufnahmeanordnung nach Anspruch 8 oder 9,
- wobei die Aufnahmeeinheit durch zwei Zeilensensoren (3a, 3b) ausgebildet ist, vor denen jeweils eine Optik angeordnet ist,
- wobei die erste Optik die Gegenstandszeile (12) auf den ersten Zeilensensor (3a) abbildet, wobei die erste Optik lediglich für Licht mit einer Polarisation senkrecht zur Einfallsebene durchlässig ist, und
- wobei die zweite Optik die Gegenstandszeile (12) auf den zweiten Zeilensensor (3b) abbildet, wobei die zweite Optik lediglich für Licht mit einer Polarisation parallel zur Einfallsebene durchlässig ist.

12. Aufnahmeanordnung nach einem der vorangehenden Ansprüche, wobei die Beleuchtungseinheit Licht mit einer Wellenlänge im Bereich zwischen 500 nm bis 780 nm abstrahlt und/oder dass die Aufnahmeeinheit für Licht im Bereich zwischen 500 nm bis 780 nm sensitiv ist.

## Claims

1. A method for the inspection of a, in particular, flat, object (1) comprising
- a texture (10) with an imprinted predetermined color gradient, and
- a transparent plastic layer (11) with a relief-like course corresponding to the color gradient, which is arranged over the texture (10),
for determining, whether the texture (10) and the plastic layer (11) lie exactly on top of each other,
a) wherein the object (1) is illuminated with unpolarized light, which is radiated at the Brewster-angle (θ_{B}), at most with a deviation of maximally 10°, onto the object (1),
b) wherein the object (1) is acquired from the opposite side by means of an acquisition unit, the optical axis of which is at the Brewster angle (θ_{B}), at most with a deviation of maximally +/- 10°, to the surface of the object (1), and wherein the optical axis of the acquisition unit and direction of radiation of the radiated light lie in a plane,
c) wherein with the acquisition unit a first image (B₁) of the object (1) is created, wherein for the image acquisition only light is used with a polarization perpendicular to the plane of incidence,
d) wherein with the acquisition unit (3) a second image of the object (1) is created, wherein for the image acquisition only light is used with a polarization parallel to the plane of incidence,
e) wherein the two images (B₁, B₂) are compared with each other by correlation and a displacement of the two images (B₁, B₂) to each other is determined on the basis of the result of the correlation,
f) wherein the thus determined displacement is compared with a predetermined threshold value and when the threshold value is exceeded by the displacement it is ascertained that the texture (1) and the plastic layer (11) do not lie exactly on top of each other,
g) wherein to determine the displacement the cross-correlation function is determined for the two images (B₁, B₂), and
h) wherein two maxima independent of each other are searched for in the cross-correlation function, and the distance between the two maxima is determined as the displacement.

2. A method according to Claim 1,
- wherein a line sensor (3) comprising a number of sensor pixels arranged in a line is used as an image acquisition unit, wherein the line direction of the line sensor is parallel to the surface of the object (1),
- wherein the object (1) and the image acquisition unit are moved relative to each other in a plane parallel to the surface of the object (1) and normal to the sensor line of the image acquisition unit along a predetermined transport direction (T),
- wherein with the image acquisition unit (3) images are created of an object line of the object (1), which is normal to the transport direction (T) of the object (1), and
- wherein the first image (B₁) and the second image (B₂) are created by merging the line images or parts of the line images, which show the object (1) acquired in each case with the same polarization.

3. A method according to Claim 2, wherein that object line (12) of the object (1), which is detected by the line sensor, is homogeneously illuminated,
in particular, by means of a line-shaped light source (2), which is normal to the transport direction (T), is located opposite the line sensor (3) and radiates light at the Brewster angle onto the object line.

4. A method according to claim 2 or 3,
- wherein to create the images (B₁, B₂) a line sensor (3) is used as an acquisition unit, in front of which two lenses are arranged,
- wherein the first lens displays the object line (12) on a first sub-area of the line sensor (3), wherein the first lens is permeable only for light with a polarization perpendicular to the plane of incidence, and
- wherein the second lens displays the object line (12) on a second sub-area of the line sensor (3), wherein the second lens is permeable only for light with a polarization parallel to the plane of incidence.

5. A method according to claim 2 or 3,
- wherein to create the images (B₁, B₂) two line sensors (3a, 3b) are used as an acquisition unit, in front of which in each case a lens is arranged,
- wherein the first lens displays the object line (12) on the first line sensor (3a), wherein the first lens is permeable only for light with a polarization perpendicular to the plane of incidence, and
- wherein the second lens displays the object line (12) on the second line sensor (3b), wherein the second lens is permeable only for light with a polarization parallel to the plane of incidence

6. A method according to one of the preceding claims, wherein
for the illumination light is used with a wave length in the range between 500 nm to 780 nm and/or
the acquisition unit detects light in the range between 500 nm to 780 nm.

7. An acquisition arrangement for the inspection of a, in particular, flat, object (1) with a texture (10) with an imprinted predetermined color gradient, and a transparent plastic layer (11) with a relief-like course corresponding to the color gradient, which is arranged over the texture (10), as well as for determining, whether the texture (10) and the plastic layer (11) lie exactly on top of each other, comprising
a) an illumination unit (2), designed for the illumination of the object (1) with unpolarized light, which radiates at the Brewster-angle (θ_{B}), at most with a deviation of maximally 10°, onto the object (1),
b) an acquisition unit (3) which is designed in order to display the object (1) from the opposite side,
wherein the optical axis of the acquisition unit is at the Brewster angle (θ_{B}), at most with a deviation of maximally +/- 10°, to the surface of the object (1), and wherein the optical axis of the acquisition unit and direction of radiation of the radiated light lie in a plane,
c) a first polarization filter, which is arranged or can be positioned in front of the acquisition unit (3) which is permeable only for light with a polarization perpendicular to the plane of incidence,
d) a second polarization filter, which is arranged or can be positioned in front of the acquisition unit (3) which is permeable only for light with a polarization parallel to the plane of incidence,
e) wherein the acquisition unit (3) is designed for the creation of a first image (B₁) under filtering of the light incident to it with the first polarization filter and a second image (B₂) under filtering of the light incident to it with the second polarization filter,
f) a comparison unit, which is designed in order to compare the two images (B₁, B₂) with each other by correlation,
and to determine a displacement of the two images relative to each other based on the result of the correlation,
g) a decision-making unit, which is designed in order to compare the thus determined displacement with a predetermined threshold value and when the threshold value is exceeded by the displacement to determine,
that the texture (10) and the plastic layer (11) do not lie exactly on top of each other,
h) wherein the comparison unit is designed in order to determine the cross-correlation function for the two images, for determining the displacement, and
i) wherein the comparison unit is designed in order to search for two maxima independent of each other in the cross-correlation function, and to determine the distance between the two maxima as the displacement.

8. An acquisition arrangement according to Claim 7,
- wherein the image acquisition unit (3) is formed by a line sensor comprising a number of sensor pixels arranged in a line, wherein the line direction of the line sensor is parallel to the surface f the object (1),
- wherein a transport device exists, which moves the object (1) and the image acquisition unit (3) along a predetermined transport direction (T) relative to each other, wherein the movement direction lies in a plane parallel to the surface of the object (1) and normal to the sensor line of the image acquisition unit (3),
- wherein the image acquisition unit (3) creates images (B₁, B₂) of an object line (12) of the object (1), wherein the object line (12) is normal to the transport direction (T) of the object (1), and
- wherein the image acquisition unit (3) creates the first image (B₁) and the second image (B₂) by merging the line images or parts of the line images, wherein the image acquisition unit (3) merges the line images acquired with polarization perpendicular to the plane of incidence for the first image (B₁) and the line images acquired with polarization parallel to the plane of incidence for the second image (B₂).

9. An acquisition arrangement according to Claim 8, wherein the illumination unit (2) homogeneously illuminates that object line (12) of the object (1), which is detected by the line sensor (3), wherein the illumination unit (2) is formed, in particular, by a line-shaped light source, which is normal to the transport direction (T), is located opposite the line sensor (3) and radiates light at the Brewster angle onto the object line (12).

10. An acquisition arrangement according to 8 or 9,
- wherein the acquisition unit (3) is formed by a line sensor, in front of which two lenses are arranged,
- wherein the first lens displays the object line (12) on a first sub-area of the line sensor (3), wherein the first lens is permeable only for light with a polarization perpendicular to the plane of incidence, and
- wherein the second lens displays the object line (12) on a second sub-area of the line sensor (3), wherein the second lens is permeable only for light with a polarization parallel to the plane of incidence.

11. An acquisition arrangement according to Claim 8 or 9,
- wherein the acquisition unit is formed by two line sensors (3a, 3b), in front of which in each case one lens is arranged,
- wherein the first lens displays the object line (12) on the first line sensor (3a), wherein the first lens is permeable only for light with a polarization perpendicular to the plane of incidence, and
- wherein the second lens displays the object line (12) on the second line sensor (3b), wherein the second lens is permeable only for light with a polarization parallel to the plane of incidence.

12. An acquisition arrangement according to one of the preceding claims, wherein the illumination unit radiates light with a wave length in the range between 500 nm to 780 nm and/or that the acquisition unit is sensitive to light in the range between 500 nm to 780 nm.

## Revendications

1. Procédé d'inspection d'un objet (1), en particulier plan, comprenant :
- une texture (10) avec un dégradé de couleurs prédéfini imprimé, et
- une couche de matière plastique (11) transparente, avec un tracé du type en relief correspondant au dégradé de couleurs, qui est disposée sur la texture (10),
pour déterminer si la texture (10) et la couche de matière plastique (11) sont superposées de façon précise,
a) l'objet (1) étant éclairé avec de la lumière non polarisée qui est projetée sur l'objet (1) selon l'angle de Brewster (θ_{B}), en tout cas avec une divergence de 10° maximum,
b)l'objet (1) étant enregistré depuis le côté opposé au moyen d'une unité d'enregistrement dont l'axe optique est situé selon l'angle de Brewster (θ_{B}), en tout cas avec une divergence de +/- 10° maximum, par rapport à la surface de l'objet (1), et l'axe optique de l'unité d'enregistrement et la direction de rayonnement de la lumière projetée étant situés dans le même plan,
c) une première image (B₁) de l'objet (1) étant établie avec l'unité d'enregistrement, seule de la lumière avec une polarisation perpendiculaire au plan d'incidence étant utilisée pour l'enregistrement,
d) une deuxième image de l'objet (1) étant établie avec l'unité d'enregistrement (3), seule de la lumière avec une polarisation parallèle au plan d'incidence étant utilisée pour l'enregistrement,
e) les deux images (B₁, B₂) étant comparées entre elles par corrélation, et un décalage des deux images (B₁, B₂) l'une par rapport à l'autre étant déterminé sur la base du résultat de la corrélation,
f) le décalage ainsi déterminé étant comparé à une valeur de seuil prédéfinie et, en cas de dépassement de la valeur de seuil par le décalage, il est constaté que la texture (10) et la couche de matière plastique (11) ne sont pas superposées de façon précise,
g) la fonction de corrélation croisée étant déterminée pour les deux images (B₁, B₂) en vue de la définition du décalage, et
h) deux maximas indépendants l'un de l'autre étant recherchés dans la fonction de corrélation croisée, et la distance entre les deux maximas étant déterminée en tant que décalage.

2. Procédé selon la revendication 1,
- un capteur linéaire (3) comprenant un certain nombre de pixels de capteur disposés sur une ligne étant utilisé en tant qu'unité de prise de vues, la direction des lignes du capteur linéaire étant parallèle à la surface de l'objet (1),
- l'objet (1) et l'unité de prise de vues étant déplacés l'un par rapport à l'autre dans un plan parallèlement à la surface de l'objet (1) et perpendiculairement à la ligne de capteur de l'unité de prise de vues le long d'une direction de transport (T) prédéfinie,
- avec l'unité de prise de vues (3), des images étant établies d'une ligne d'objet de l'objet (1) qui est perpendiculaire à la direction de transport (T) de l'objet (1), et
- la première image (B₁) et la deuxième image (B₂) étant établies par l'assemblage des images de lignes ou de parties des images de lignes qui montrent l'objet (1) enregistré respectivement pour une même polarisation.

3. Procédé selon la revendication 2,
la ligne d'objet (12) de l'objet (1) qui est détectée par le capteur linéaire, étant éclairée de façon homogène,
en particulier au moyen d'une source de lumière (2) de forme linéaire qui est perpendiculaire à la direction de transport (T), est opposée au capteur linéaire (3) et projette de la lumière sur la ligne d'objet selon l'angle de Brewster.

4. Procédé selon la revendication 2 ou 3,
- un capteur linéaire (3) devant lequel sont disposées deux optiques étant utilisé en tant qu'unité d'enregistrement pour l'établissement des images (B₁, B₂),
- la première optique reproduisant la ligne d'objet (12) sur une première zone partielle du capteur linéaire (3), la première optique n'étant transparente que pour la lumière avec une polarisation perpendiculaire au plan d'incidence, et
- la deuxième optique reproduisant la ligne d'objet (12) sur une deuxième zone partielle du capteur linéaire (3), la deuxième optique n'étant transparente que pour la lumière avec une polarisation parallèle au plan d'incidence.

5. Procédé selon la revendication 2 ou 3,
- deux capteurs linéaires (3a, 3b) devant lesquels est disposée respectivement une optique étant utilisés en tant qu'unité d'enregistrement pour l'établissement des images (B₁, B₂),
- la première optique reproduisant la ligne d'objet (12) sur le premier capteur linéaire (3a), la première optique n'étant transparente que pour la lumière avec une polarisation perpendiculaire au plan d'incidence, et
- la deuxième optique reproduisant la ligne d'objet (12) sur le deuxième capteur linéaire (3b), la deuxième optique n'étant transparente que pour la lumière avec une polarisation parallèle au plan d'incidence.

6. Procédé selon l'une des revendications précédentes, de la lumière avec une longueur d'onde dans la plage entre 500 nm et 780 nm étant utilisée pour l'éclairage et/ou l'unité d'enregistrement détectant la lumière dans la plage entre 500 nm et 780 nm.

7. Agencement d'enregistrement pour l'inspection d'un objet, en particulier plan, avec une texture (10) avec un dégradé de couleurs prédéfini imprimé, et une couche de matière plastique (11) transparente, avec un tracé du type en relief correspondant au dégradé de couleurs, qui est disposée sur la texture (10), ainsi que pour déterminer si la texture (10) et la couche de matière plastique (11) sont superposées de façon précise, comprenant
a) une unité d'éclairage (2), constituée pour éclairer l'objet (1) avec de la lumière non polarisée qui est projetée sur la surface de l'objet (1) selon l'angle de Brewster (θ_{B}), en tout cas avec une divergence de 10° maximum,
b) une unité d'enregistrement (3) qui est constituée pour reproduire l'objet (1) à partir du côté opposé,
l'axe optique de l'unité d'enregistrement étant situé selon l'angle de Brewster, en tout cas avec une divergence de +/-10° maximum, par rapport à la surface de l'objet (1), et l'axe optique de l'unité d'enregistrement et la direction de rayonnement de la lumière projetée étant situés dans le même plan,
c) un premier filtre de polarisation disposé et pouvant être positionné devant l'unité d'enregistrement (3), qui n'est transparent qu'à la lumière avec une polarisation perpendiculaire au plan d'incidence,
d) un deuxième filtre de polarisation disposé et pouvant être positionné devant l'unité d'enregistrement (3), qui n'est transparent qu'à la lumière avec une polarisation parallèle au plan d'incidence,
e) l'unité d'enregistrement (3) étant constituée pour l'établissement d'une première image (B₁) avec un filtrage de la lumière qui lui est incidente avec le premier filtre de polarisation et d'une deuxième image (B₂) avec un filtrage de la lumière qui lui est incidente avec le deuxième filtre de polarisation,
f) une unité de comparaison qui est constituée pour comparer par corrélation les deux images (B₁, B₂) l'une avec l'autre,
et pour déterminer un décalage des deux images l'une par rapport à l'autre sur la base du résultat de la corrélation,
g) une unité de décision qui est constituée pour comparer le décalage ainsi déterminé avec une valeur de seuil prédéfinie et, en cas de dépassement de la valeur de seuil, pour constater par le décalage que la texture (10) et la couche de matière plastique (11) ne sont pas superposées de façon précise,
h) l'unité de comparaison étant constituée pour déterminer la fonction de corrélation croisée pour les deux images pour définir le décalage, et
i) l'unité de comparaison étant constituée pour rechercher dans la fonction de corrélation croisée deux maximas indépendants l'un de l'autre, et pour déterminer la distance entre les deux maximas en tant que décalage.

8. Agencement d'enregistrement selon la revendication 7,
- l'unité de prise de vues (3) étant constituée d'un capteur linéaire comprenant un certain nombre de pixels de capteur disposés sur une ligne, la direction de lignes du capteur linéaire étant parallèle à la surface de l'objet (1),
- un système de transport étant présent, qui déplace l'un par rapport à l'autre l'objet (1) et l'unité de prise de vues (3) le long d'une direction de transport (T) prédéfinie, la direction du déplacement étant située dans un même plan parallèlement à la surface de l'objet (1) et perpendiculairement à la ligne de capteur de l'unité de prise de vues (3),
- l'unité de prise de vues (3) établissant des images (B₁, B₂) d'une ligne d'objet (12) de l'objet (1), la ligne d'objet (12) étant perpendiculaire à la direction de transport (T) de l'objet (1), et
- l'unité de prise de vues (3) établissant la première image (B₁) et la deuxième image (B₂) par l'assemblage des images de lignes ou de parties des images de lignes, l'unité de prise de vues (3) assemblant les images de lignes prises avec une polarisation perpendiculairement au plan d'incidence par rapport à la première image (B₁) et assemblant les images de lignes prises avec une polarisation parallèlement au plan d'incidence par rapport à la deuxième image (B₂).

9. Agencement d'enregistrement selon la revendication 8,
l'unité d'éclairage (2) éclairant de façon homogène la ligne d'objet (12) de l'objet (1) qui est détectée par le capteur linéaire (3),
l'unité d'éclairage (2) étant formée en particulier par une source de lumière de forme linéaire qui est perpendiculaire à la direction de transport (T), est opposée au capteur linéaire (3) et projette de la lumière sur la ligne d'objet (12) selon l'angle de Brewster.

10. Agencement d'enregistrement selon la revendication 8 ou 9,
- l'unité d'enregistrement (3) étant constituée d'un capteur linéaire devant lequel sont disposées deux optiques,
- la première optique reproduisant la ligne d'objet (12) sur une première zone partielle du capteur linéaire (3), la première optique n'étant transparente que pour la lumière avec une polarisation perpendiculaire au plan d'incidence, et
- la deuxième optique reproduisant la ligne d'objet (12) sur une deuxième zone partielle du capteur linéaire (3), la deuxième optique n'étant transparente que pour la lumière avec une polarisation parallèle au plan d'incidence.

11. Agencement d'enregistrement selon la revendication 8 ou 9,
- l'unité d'enregistrement étant constituée de deux capteurs linéaires (3a, 3b) devant lesquels est disposée respectivement une optique,
- la première optique reproduisant la ligne d'objet (12) sur le premier capteur linéaire (3a), la première optique n'étant transparente que pour la lumière avec une polarisation perpendiculaire au plan d'incidence, et
- la deuxième optique reproduisant la ligne d'objet (12) sur le deuxième capteur linéaire (3b), la deuxième optique n'étant transparente que pour la lumière avec une polarisation parallèle au plan d'incidence.

12. Agencement d'enregistrement selon l'une des revendications précédentes, l'unité d'éclairage projetant la lumière avec une longueur d'onde dans la plage de 500 nm à 780 nm et/ou l'unité d'enregistrement étant sensible à la lumière dans la plage de 500 nm à 780 nm.
